Europäisches Patentamt

European Patent Office

Office européen des brevets

(19)

(11) Veröffentlichungsnummer : **0 108 163**
**B1**

(12) # EUROPÄISCHE PATENTSCHRIFT

(45) Veröffentlichungstag der Patentschrift :
01.10.86

(21) Anmeldenummer : 82110300.9 .

(22) Anmeldetag : 09.11.82

(51) Int. Cl.⁴ : **G 03 B 15/00, G 03 B 17/24**

(54) **Aufnahmegerät zur Herstellung der Aufzeichnung auf einem Bildträger sowie Aufzeichnungsverfahren hierzu.**

(43) Veröffentlichungstag der Anmeldung :
16.05.84 Patentblatt 84/20

(45) Bekanntmachung des Hinweises auf die Patenterteilung : 01.10.86 Patentblatt 86/40

(84) Benannte Vertragsstaaten :
**AT BE CH DE FR GB IT LI LU NL SE**

(56) Entgegenhaltungen :
**FR-A- 2 083 983**
**FR-A- 2 293 724**
**US-A- 1 933 953**
**US-A- 3 069 987**

(73) Patentinhaber : **Volz, Willi**
**Geranienstrasse 10**
**D-7513 Stutensee 1 (DE)**

(72) Erfinder : **Volz, Willi**
**Geranienstrasse 10**
**D-7513 Stutensee 1 (DE)**

(74) Vertreter : **Moser, Herbert, Dr.-Ing.**
**Nowackanlage 15**
**D-7500 Karlsruhe (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Aufnahmekamera, bei der mit einem von einem aktuellen Gegenstand herrührenden aktuellen Bild und mit einem von mindestens einer transparenten Motivvorlage erzeugten Bild auf einem Bildträger ein kombiniertes Bild aufgezeichnet wird, wobei der für die Aufnahme des aktuellen Bildes vorhandene Lichtschacht eine direkte Aufnahmevorrichtung aufweist, und ein für die Aufnahme des von einer transparenten Motivvorlage herrührenden Bildes vorgesehener getrennter Lichtschacht einen Träger für die transparente Motivvorlage sowie eine Projektionsvorrichtung enthält.

Für verschiedene Anwendungszwecke besteht der Wunsch, mit einer Aufnahmekamera zusammen mit einem von einem Gegenstand herrührenden aktuellen Bild auch zusätzliche, beispielsweise durch Projektion erzeugte, Bildbestandteile gemeinsam aufzunehmen. Dies ermöglicht, beispielsweise Personen, Personengruppen oder Gegenstände als aktuelle Bilder mit vorgegebenen Motivbildern in getrennten Bildbereichen zu kombinieren.

Zum bekannten Stande der Technik gehören fotographisch hergestellte Bildträger, bei denen verschiedene Motivvorlagen und aktuelle Bildbestandteile durch Beschneiden und Zusammensetzen bzw. Aufkleben zu einer Bildvorlage kombiniert werden, die dann als Ganzes fotographisch wiedergegeben wird. Das Herstellen derartiger Bildvorlagen erfordert qualifizierte Bearbeitungsvorgänge, die im allgemeinen nur von besonders geschulten Fachleuten übernommen werden können.

In der DE-B-1 029 227 ist eine Anordnung für Film- oder Fernsehaufnahmen beschrieben, welche die Kombination eines aktuellen Bildes mit einem durch Projektion zustande gekommenen Hintergrund ermöglicht. Hierzu befindet sich der aufzunehmende Gegenstand vor einem mit autokollimatorischen Teilchen belegten Bildschirm, auf dem über einen in der Lichtführung der vor dem Bildschirm aufgestellten Aufnahmekamera liegenden halbdurchlässigen Spiegel von einem Projektionsapparat ein Projektionsbild entworfen wird. Dadurch entsteht in der Aufnahmeebene der Kamera ein kombiniertes Bild, bei dem sich aktuelle Bildbestandteile und Motivvorlagen im gleichen Bildausschnitt vereinigen.

Aus der FR-A-2 293 724 ist eine Aufnahmekamera zur Herstellung von Ausweisdokumenten bekannt, bei der zusammen mit einem Personenfoto auch personenbezogene Daten in einem besonderen Bereich des Bildträgers aufgezeichnet werden. Die Kamera enthält eine erste und eine doppelt ausgebildete zweite Belichtungsstation, in denen das Filmmaterial belichtet und weitertransportiert wird. In der zweiten Aufnahmestation ist ein optisches System zur Auflichtprojektion eines nichttransparenten Datenträgers und ein aktuelles Aufnahmesystem zur Aufnahme des Personenbildes vorgesehen.

Die US-A-1 933 953 beschreibt eine Aufnahmekamera zur Herstellung von Bildpostkarten, wobei in zwei nacheinanderfolgenden Aufnahmestationen zuerst die Aufzeichnung des als transparente Motivvorlage gestalteten durch ein Projektionssystem abgebildeten Bildhintergrundes und dann die Aufnahme des von einer Person herrührenden aktuellen Bildes erfolgt.

Die Erfindung geht von der Aufgabenstellung aus, eine Aufnahmekamera, insbesondere zur Herstellung von Bildpostkarten zu schaffen, mit der in einfacher Weise auf verschiedenen Bereichen des Bildträgers Motivvorlagen und aktuelle Bilder kombiniert werden können. Zur Lösung dieser Aufgabenstellung ist vorgesehen, daß in dem Gehäuse der Aufnahmekamera mindestens drei Lichtschächte vorgesehen sind, daß jeder für die Wiedergabe einer transparenten Motivvorlage vorgesehene Lichtschacht einen Motivträger und eine Projektionsvorrichtung enthält, und daß die Lichtschächte auf verschiedene Bereiche des Bildträgers gerichtet sind. Die Motivträger können dabei in verschiedener Weise, beispielsweise als Negativ- oder Dia-Bild gewählt werden. Bevorzugt wird ein Bildträger mit fotochemischer Bildaufzeichnung. Als Bildträger kann geeignetes Fotomaterial mit nachfolgendem Entwicklungsvorgang oder auch Sofortbildmaterial verwendet werden. Die im Gehäuse der Aufnahmekamera angeordneten Lichtschächte können in verschiedener Weise ausgebildet sein und müssen nicht über die gesamte Weglänge der Lichtführung zwischen Motivvorlage und Filmoberfläche geschlossen sein.

In weiterer Ausbildung der Erfindung kann es zweckmäßig sein, daß in dem Gehäuse der Aufnahmekamera mehrere nebeneinanderliegende Lichtschächte angeordnet sind. Ferner können vorteilhaft die zur Wiedergabe der Motivvorlagen bestimmten Lichtschächte mit einer elektrischen Beleuchtungsvorrichtung versehen sein, welche beispielsweise eine elektrische Lichtquelle, z. B. eine Blitzlichtquelle enthält. Die Motivträger lassen sich zweckmäßig für auswechselbare Motivvorlagen ausbilden. Dadurch ergibt sich die Möglichkeit einer leichten Anpassung der Motivbestandteile an verschiedene Einsatzbereiche. Die Motivträger können zweckmäßig zur Aufnahme vom gerahmten Dia-Bildern ausgerüstet sein. Bei der Verwendung von Dia-Negativen muß dabei in den Lichtführungen eine entsprechende Bildumkehr bzw. eine Komplimentärfarbumsetzung durchgeführt werden. Die entsprechenden technischen Merkmale sind durch die Dia-Kopiertechnik vorbekannt.

Es kann ferner zweckmäßig sein, daß die nebeneinander angeordneten Lichtschächte auf dem Bildträger aufliegen und im Bereich dieser Auflage gegen Fremdbildeinstreuung abgedichtet sind. Hierzu dienen bekannte Elemente, wie beispielsweise mit Samtstreifen belegte Rahmenleisten.

Bei einer anderen zweckmäßigen Ausbildung können die Lichtschächte mit den Motivträgern reihen- und zeilenweise angeordnet sein und einen mittleren Lichtschacht mit der direkten Aufnahmevorrichtung, beispielsweise in Form eines optischen Aufnahmesystems mit Linsensystem, Blende und Verschlußeinrichtung, umgeben. Vorteilhaft erscheint es dabei, die Lichtschächte mit Motivträgern rechteckig zu gestalten und den Lichtschacht mit der direkten Aufnahmevorrichtung zylinderförmig auszubilden. Dadurch läßt sich eine optisch ansprechende Postkarteneinteilung erreichen, bei der z. B. reihen- und zeilenweise angeordnete Bildbestandteile mit Motiven des Urlaubsortes einen mittleren aktuellen Bildbestandteil, z. B. in Form einer Person, einschließen.

In der technischen Ausbildung erscheint es vorteilhaft, das Gehäuse der Aufnahmekamera aus modulartig zusammensetzbaren Lichtschächten aufzubauen und im Bereich der Motivträger aufklappbar auszubilden, so daß eine leichte Auswechselbarkeit der Motivvorlagen ermöglicht wird. Die Motivträger sind zweckmäßig in einer Ebene anzuordnen.

Als Beleuchtungsvorrichtung kann neben der Verwendung von Blitzlichtquellen auch die Anordnung einer lichtabstrahlenden Fläche zweckmäßig sein.

Ein vorteilhaftes Verfahren, bei dem mit einem von einem aktuellen Gegenstand herrührenden aktuellen Bild und mit einem von mindestens einer transparenten Motivvorlage erzeugten Bild auf einem Bildträger ein kombiniertes Bild aufgezeichnet wird, wobei die für die Aufnahme des aktuellen Bildes vorgesehene Lichtführung eine direkte Aufnahmevorrichtung aufweist, und eine für die Aufnahme eines von einer transparenten Motivvorlage herrührenden Bildes vorgesehene getrennte Lichtführung einen Träger für die transparente Motivvorlage sowie eine Projektionsvorrichtung enthält, läßt sich zweckmäßig in der Weise ausführen, daß in dem Gehäuse der Aufnahmekamera mindestens drei Lichtführungen auf verschiedene Bereiche des während der Bildaufzeichnung stationären Bildträgers gerichtet werden, und daß durch jede für die Wiedergabe einer transparenten Motivvorlage vorgesehene Lichtführung durch je eine Projektionsvorrichtung ein Bild auf verschiedene Bereiche des Bildträgers projiziert wird. Dabei kann es zweckmäßig sein, eine Synchronisierung der Bildaufzeichnung derart vorzusehen, daß die Aufzeichnung des aktuellen Bildes gleichzeitig mit derjenigen von den Motivvorlagen erfolgt.

Damit die von den transparenten Motivvorlagen herrührenden Bilder und das aktuelle Bild hinsichtlich Lichtstärke und Farbtemperatur aneinander angepaßt sind, erscheint es gegebenenfalls zweckmäßig, die Projektionsvorrichtungen mit der gleichen Lichtquelle, z. B. mit einer Blitzlichtquelle, zu speisen, wie die direkte Aufnahmevorrichtung. Damit lassen sich Abweichungen, die von einer unterschiedlichen Lichtzusammensetzung für die einzelnen Bildbereiche herrühren können, vermeiden. Die Projektionsvorrichtungen für die transparenten Motivvorlagen können jedoch gegebenenfalls zweckmäßig auch mit entsprechenden in ihrer Farbtemperatur angepaßten Blitzlichtquellen beleuchtet werden.

Durch die Merkmale der Erfindung ist es möglich, einen Bildträger mit aktuellen Bildbestandteilen und Motivbildern, welcher für Postkarten, Geschäftsdrucksachen und dergleichen angewendet werden kann, in einfacher Weise herzustellen. Zeitraubende, vorbereitende Arbeitsgänge einer Bildmontage sind hierbei überflüssig.

In der Zeichnung ist ein Ausführungsbeispiel einer Aufnahmekamera gemäß der Erfindung schematisch dargestellt ; es zeigen :

Figur 1 eine Rastereinteilung mit acht Feldern für Motivbilder und einem mittleren Feld für das aktuelle Bild,

Figur 2 eine Draufsicht auf eine Aufnahmekamera mit drei nebeneinanderliegenden Lichtschächten für Motivvorlagen entsprechend der Reihe 1, 2, 3 in Fig. 1,

Figur 3 einen Querschnitt durch die in Fig. 2 dargestellte Aufnahmekamera, wobei die Schnittebene in der Mitte der Reihe 4, 9, 5 aus Fig. 1 verläuft.

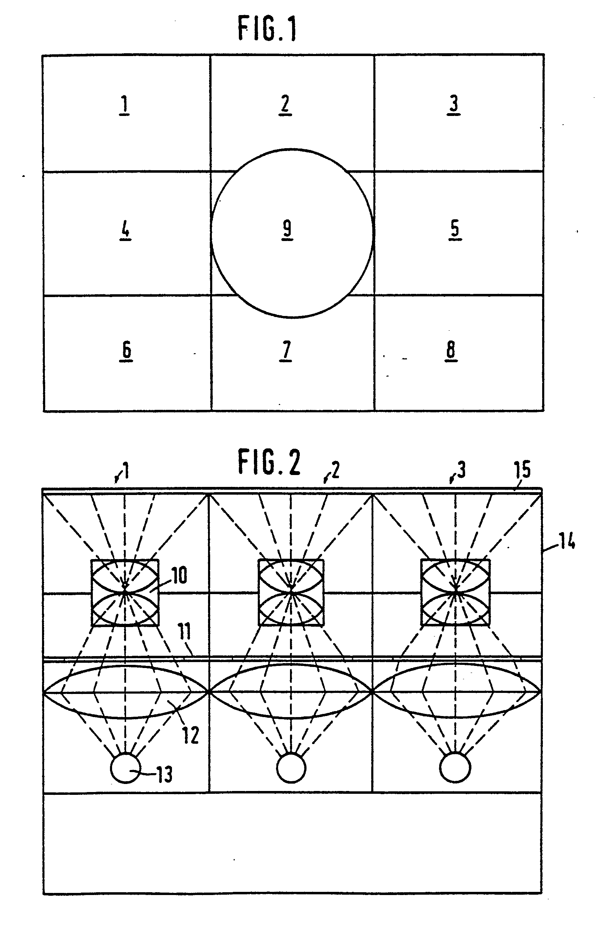

Die Rastereinteilung nach Fig. 1 zeigt insgesamt acht rechteckig gestaltete Lichtschächte 1, 2, 3, 4, 5, 6, 7, 8, die zur Aufnahme der von den transparenten Motivvorlagen erzeugten Bilder bestimmt sind. Sie umschließen einen mittleren zylinderförmigen Lichtschacht 9, der die Teile der direkten Aufnahmevorrichtung enthält.

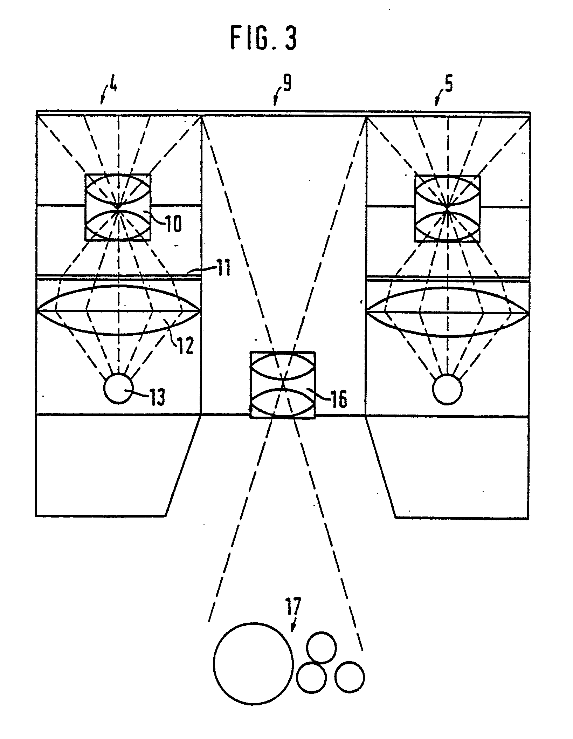

Unter Bezug auf die Fig. 2 und 3 erkennt man in den Lichtschächten 1, 2, 3, 4, 5 Projektionsvorrichtungen, welche jeweils aus einem Vergrößerungsobjektiv 10 in der Lichtführung hinter einem Motivträger 11 und einer die Beleuchtungsvorrichtung bildenden Lichtquelle 13 mit vorgeschaltetem Kondensor 12 bestehen.

An der Bodenseite eines Gehäuses 14 befindet sich in entsprechender ebener Anpressung ein Bildträger 15. Das Gehäuse 14 ist in der Ebene der Motivträger 11 aufklappbar.

Im Lichtschacht 9 ist eine in bekannter Weise ausgebildete Aufnahmeoptik 16 vorgesehen, welche ein Linsensystem, eine Blende und einen Verschluß enthält. Diese Direktaufnahmevorrichtung bildet einen aktuellen Gegenstand 17 auf dem entsprechenden kreisförmigen Bereich 9 des Aufnahmerasters ab.

Die Lichtquelle 13 kann sowohl eine elektrische Lichtquelle (Lampe, Blitzlicht), u. U. mit Kondensor oder Filter, als auch eine lichtabstrahlende Fläche sein. Je nach der Art der Lichtquelle kann zweckmäßig ein Vergrößerungsobjektiv 10 mit oder ohne Verschluß verwendet werden.

**Patentansprüche**

1. Aufnahmekamera, bei der mit einem von einem aktuellen Gegenstand herrührenden aktuellen Bild und mit einem von mindestens einer transparenten Motivvorlage erzeugten Bild auf einem Bildträger ein kombiniertes Bild aufgezeichnet wird, wobei der für die Aufnahme des aktuellen Bildes vorhandene Lichtschacht eine direkte Aufnahmevorrichtung aufweist, und ein für die Aufnahme des von einer transparenten Motivvorlage herrührenden Bildes vorgesehener getrennter Lichtschacht einen Träger für die transparente Motivvorlage, sowie eine Projektionsvorrichtung enthält, dadurch gekennzeichnet, daß in dem Gehäuse (14) der Aufnahmekamera mindestens drei Lichtschächte (1 bis 9) vorgesehen sind, daß jeder für die Wiedergabe einer transparenten Motivvorlage vorgesehene Lichtschacht (1 bis 8) einen Motivträger (11) und eine Projektionsvorrichtung (10, 12) enthält, und daß die Lichtschächte (1 bis 9) auf verschiedene Bereiche des Bildträgers (15) gerichtet sind.

2. Aufnahmekamera nach Anspruch 1, dadurch gekennzeichnet, daß in dem Gehäuse (14) der Aufnahmekamera mehrere nebeneinanderliegende Lichtschächte (1 bis 9) angeordnet sind.

3. Aufnahmekamera nach Anspruch 1, dadurch gekennzeichnet, daß die zur Wiedergabe der Motivvorlagen bestimmten Lichtschächte (1 bis 8) mit einer elektrischen Beleuchtungsvorrichtung (13) versehen sind.

4. Aufnahmekamera nach Anspruch 1, dadurch gekennzeichnet, daß die Motivträger (11) für auswechselbare Motivvorlagen ausgebildet sind.

5. Aufnahmekamera nach Anspruch 1, dadurch gekennzeichnet, daß die Motivträger (11) zur Aufnahme von gerahmten Dia-Bildern ausgebildet sind.

6. Aufnahmekamera nach Anspruch 2, dadurch gekennzeichnet, daß die nebeneinander angeordneten Lichtschächte (1 bis 9) auf dem Bildträger (15) aufliegen, und im Bereich dieser Auflage gegen Fremdbildeinstreuung abgedichtet sind.

7. Aufnahmekamera nach Anspruch 1, dadurch gekennzeichnet, daß die Lichtschächte (1 bis 8) mit den Motivträgern (11) reihen- und zeilenweise angeordnet sind und einen mittleren Lichtschacht (9) mit der direkten Aufnahmevorrichtung (16) umschließen.

8. Aufnahmekamera nach Anspruch 1, dadurch gekennzeichnet, daß die Lichtschächte (1 bis 8) mit Motivträgern (11) rechteckig gestaltet sind, und daß der Lichtschacht (9) mit der direkten Aufnahmevorrichtung (16) zylinderförmig ausgebildet ist.

9. Aufnahmekamera nach Anspruch 1, dadurch gekennzeichnet, daß das Gehäuse (14) modulartig zusammensetzbare Lichtschächte (1 bis 9) aufnimmt.

10. Aufnahmekamera nach Anspruch 3, dadurch gekennzeichnet, daß für die Beleuchtungsvorrichtung eine Blitzlichtquelle vorgesehen ist.

11. Aufnahmekamera nach Anspruch 3, dadurch gekennzeichnet, daß für die Beleuchtungsvorrichtung eine lichtabstrahlende Fläche vorgesehen ist.

12. Aufnahmekamera nach Anspruch 1, dadurch gekennzeichnet, daß das Gehäuse (14) im Bereich der Motivträger (11) aufklappbar ist.

13. Aufnahmekamera nach Anspruch 1, dadurch gekennzeichnet, daß die Motivträger (11) in einer Ebene liegen.

14. Verfahren, bei dem mit einem von einem aktuellen Gegenstand herrührenden aktuellen Bild und mit einem von mindestens einer transparenten Motivvorlage erzeugten Bild auf einem Bildträger ein kombiniertes Bild aufgezeichnet wird, wobei die für die Aufnahme des aktuellen Bildes vorgesehene Lichtführung eine direkte Aufnahmevorrichtung aufweist, und eine für die Aufnahme eines von einer transparenten Motivvorlage herrührenden Bildes vorgesehene getrennte Lichtführung einen Träger für die transparente Motivvorlage sowie eine Projektionsvorrichtung enthält, dadurch gekennzeichnet, daß in dem Gehäuse der Aufnahmekamera mindestens drei Lichtführungen auf verschiedene Bereiche des während der Bildaufzeichnung stationären Bildträgers (15) gerichtet werden, und daß durch jede für die Wiedergabe einer transparenten Motivvorlage vorgesehene Lichtführung durch je eine Projektionsvorrichtung (10, 12) ein Bild auf verschiedene Bereiche des Bildträgers (15) projiziert wird.

15. Verfahren nach Anspruch 14, dadurch gekennzeichnet, daß eine Synchronisierung der Bildaufzeichnung derart vorgesehen ist, daß die Aufzeichnung des aktuellen Bildes gleichzeitig mit derjenigen von den Motivvorlagen erfolgt.

16. Verfahren nach Anspruch 14, dadurch gekennzeichnet, daß für die Wiedergabe der Motivvorlagen die gleiche Lichtquelle verwendet wird, wie für die direkte Aufnhame des aktuellen Bildes.

**Claims**

1. A camera, with which an image is recorded on an image carrier which is a combination of a real image coming from a real subject and an image produced from at least one transparent background design, the light shaft provided for recording the real image comprising a direct recording device, and a separate light shaft, provided for recording the image coming from a transparent background design, comprising a carrier for the transparent background design and a projection device, characterized in that in the camera housing (14) there are provided at least three light shafts (1 to 9), that each light shaft (1 to 8) provided for the reproduction of a transparent background design comprises a design carrier (11) and a projection device (10, 12) and that the light shafts (1 to 9) are directed at different areas of the image carrier (15).

2. A camera according to claim 1, characterized in that several light shafts (1 to 9) are arranged side by side in the camera housing (14).

3. A camera according to claim 1, characterized in that the light shafts (1 to 8) intended for the reproduction of the background designs are provided with an electric lighting device (13).

4. A camera according to claim 1, characterized in that the design carriers (11) are constructed for exchangeable background designs.

5. A camera according to claim 1, characterized in that the design carriers (11) are constructed to receive framed transparencies.

6. A camera according to claim 2, characterized in that the light shafts (1 to 9) arranged side by side about the image carrier (15) and are sealed in the area of this abutment against stray image pick-up.

7. A camera according to claim 1, characterized in that the light shafts (1 to 8) with the design carriers (11) are arranged in rows and columns around a central light shaft (9) with the direct recording device (16).

8. A camera according to claim 1, characterized in that the light shafts (1 to 8) with the design carriers (11) are rectangular in form, and that the light shaft (9) with the direct image recording device (16) is constructed cylindrically.

9. A camera according to claim 1, characterized in that the housing (14) houses modularly assembled light shafts (1 to 9).

10. A camera according to claim 3, characterized in that the lighting device is a flash-light source.

11. A camera according to claim 3, characterized in that the lighting device is a light-radiating area.

12. A camera according to claim 1, characterized in that the housing (14) can be opened in the area of the design carriers (11).

13. A camera according to claim 1, characterized in that the design carriers (11) are located in the same plane.

14. A method whereby an image is recorded on an image carrier which is a combination of a real image coming from a real subject and an image created from at least one transparent background design, the light way provided for the recording of the real image comprising a direct recording device, and a separate light way, provided for the recording of an image coming from a transparent background design, comprising a carrier for the transparent background design and a projection device, characterized in that in the camera housing at least three light ways are directed at different areas of the image carrier (15), which is stationary during image-recording, and that through each light way provided for the reproduction of a transparent background design an image is projected onto different areas of the image carrier (15) by a respective projection device (10, 12).

15. A method according to claim 14, characterized in that synchronization of the image recording is provided in such a way that the real image is recorded at the same time as the images from the background designs.

16. A method according to claim 14, characterized in that the same light source is used for the reproduction of the background designs as for the direct recording of the real image.

**Revendications**

1. Appareil de prise de vues, avec lequel on enregistre sur un support d'image une image résultant de la combinaison d'une image réelle d'un objet réel et d'une image d'au moins un modèle transparent, le canal optique prévu pour l'enregistrement de l'image réelle comportant un dispositif de prise de vues directe, et un canal optique séparé prévu pour l'enregistrement de l'image du modèle transparent comportant un support pour le modèle transparent ainsi qu'un dispositif de projection, caractérisé en ce qu'on prévoit dans le carter (14) de l'appareil de prise de vues au moins trois canaux optiques (1 à 9), que chaque canal optique (1 à 8) prévu pour la reproduction d'un modèle transparent contient un support de modèle (11) et un dispositif de projection (10-12), et que les canaux optiques (1 à 9) sont orientés sur des zones différentes du support d'image (15).

2. Appareil de prise de vues selon la revendication 1, caractérisé en ce que plusieurs canaux optiques (1 à 9) sont disposés l'un à côté de l'autre dans le carter (14) de l'appareil de prise de vues.

3. Appareil de prise de vues selon la revendication 1, caractérisé en ce que les canaux optiques (1 à 8) destinés à la reproduction des modèles sont munis d'un dispositif d'éclairage électrique (13).

4. Appareil de prise de vues selon la revendication 1, caractérisé en ce que les supports de modèle (11) sont conçus pour des modèles interchangeables.

5. Appareil de prise de vues selon la revendication 1, caractérisé en ce que les supports de modèle (11) sont conçus pour recevoir des diapositives encadrées.

6. Appareil de prise de vues selon la revendication 2, caractérisé en ce que les canaux optiques (1 à 9) disposés l'un à côté de l'autre sont appliqués sur le support d'image (15) et qu'ils sont étanches à l'interférence d'images extérieures dans la zone de leur appui.

7. Appareil de prise de vues selon la revendication 1, caractérisé en ce que les canaux optiques (1 à 8) sont disposés avec les supports de modèle (11) par rangées et par lignes et entourent un canal optique médian (9) contenant le dispositif de prise de vues directe (16).

8. Appareil de prise de vues selon la revendication 1, caractérisé en ce que les canaux optiques (1 à 8) comportant les supports de modèle (11) sont de forme rectangulaire, et le canal optique (9) comportant le dispositif de prise de vues directe (16) est de forme cylindrique.

9. Appareil de prise de vues selon la revendication 1, caractérisé en ce que le carter (14) loge des canaux optiques (1 à 9) pouvant être assemblés à la façon de modules.

10. Appareil de prise de vues selon la revendication 3, caractérisé en ce qu'on prévoit un flash pour le dispositif d'éclairage.

11. Appareil de prise de vues selon la revendication 3, caractérisé en ce qu'on prévoit une surface réfléchissant la lumière pour le dispositif d'éclairage.

12. Appareil de prise de vues selon la revendication 1, caractérisé en ce que le carter (14) peut s'ouvrir dans la zone des supports de modèle (11).

13. Appareil de prise de vues selon la revendication 1, caractérisé en ce que les supports de modèle (11) sont situés dans un plan.

14. Procédé selon lequel on enregistre sur un support d'image une image résultant de la combinaison d'une image réelle d'un objet réel et d'une image d'au moins un modèle transparent, le canal optique prévu pour l'enregistrement de l'image réelle comportant un dispositif de prise de vues directe, et un canal optique séparé prévu pour l'enregistrement de l'image du modèle transparent comportant un support pour le modèle transparent ainsi qu'un dispositif de projection, caractérisé en ce que, dans le carter de l'appareil de prise de vues, au moins trois canaux optiques sont orientés sur des zones différentes du support d'image (15) qui est stationnaire pendant l'enregistrement de l'image, et, par chaque canal optique prévu pour la reproduction d'un modèle transparent, une image est projetée respectivement par un dispositif de projection (10, 12) sur des zones différentes du support d'image (15).

15. Procédé selon la revendication 14, caractérisé en ce qu'on prévoit une synchronisation de l'enregistrement des images de telle sorte que l'enregistrement de l'image réelle s'effectue en même temps que celui des modèles.

16. Procédé selon la revendication 14, caractérisé en ce qu'on utilise pour la reproduction des modèles la même source de lumière que pour l'enregistrement direct de l'image réelle.

# FIG.1

| | | |
|---|---|---|
| <u>1</u> | <u>2</u> | <u>3</u> |
| <u>4</u> | <u>9</u> | <u>5</u> |
| <u>6</u> | <u>7</u> | <u>8</u> |

# FIG.2

FIG. 3